# EUROPEAN PATENT APPLICATION

(11) **EP 1 231 543 A2**
(43) Date of publication of application: **14.08.2002**
(21) Application number: 02003368.4
(22) Date of filing: 13.02.2002
(51) Int. Cl.: G06F 15/167, G06F 13/18

(54) **Shared-memory controller for use in a multimedia processor system**

(30) Priority: 13.02.2001 JP 2001035244
(71) Applicant: MATSUSHITA ELECTRIC INDUSTRIAL CO., LTD., Kadoma-shi, Osaka-fu (JP)
(72) Inventor: Chow, Kong Mun, Singapore 100057 (SG); Bi, Michael Mi, Singapore 680017 (SG); Tanaka, Takeshi, Nakagyo-ku, Kyoto-shi 604-8074 (JP)
(74) Representative: Eisenführ, Speiser & Partner

(57) **Abstract**

With a shared common memory, internal requests of a multimedia processor (70) is processed to generate a request (140) optimized in format. Each internal request is selected by the request controller according to a system priority. Each of external requests is independently subjected to an analyzing process for each format adapter (160), and is converted into a format compatible with a predetermined internal format of the multimedia processor. Thus, one or more external processors share a common memory to enable the external processors to access a bulk memory storage of a multimedia processor.

## Description

### BACKGROUND OF THE INVENTION

### Field of the Invention

The present invention generally relates to an implementation of a unified memory access interface suitable for use in a multimedia processor system, and more particularly relates to a multimedia processor for decoding audio/video (hereinbelow called "A/V") data and a shared-memory controller for use in a consumer product such as a DVD player, DVD recorder, set-top box, and the like.

### Description of the Prior Art

In many multimedia processors, there is provided an internal memory controller which interfaces to a memory module such as a synchronous DRAM, a DDR (double-data-rate) synchronous DRAM, and a RAMBUS. The memory stores and processes information such as bitstream data, frame-memory and multimedia decoding parameters. Usually, the multimedia processor uses a storage or memory device of a low cost having a bulk storage capacity. Ordinarily, however, such a storage device can not be shared with the other external processors such as a host CPU and a microcontroller.

These external processors usually include memory controllers and memory (storage) devices individually dedicated for the processors. As a result, this makes the entire multimedia system to be expensive. One of these external processors is a host CPU of a multimedia system that performs operations including user interaction and control.

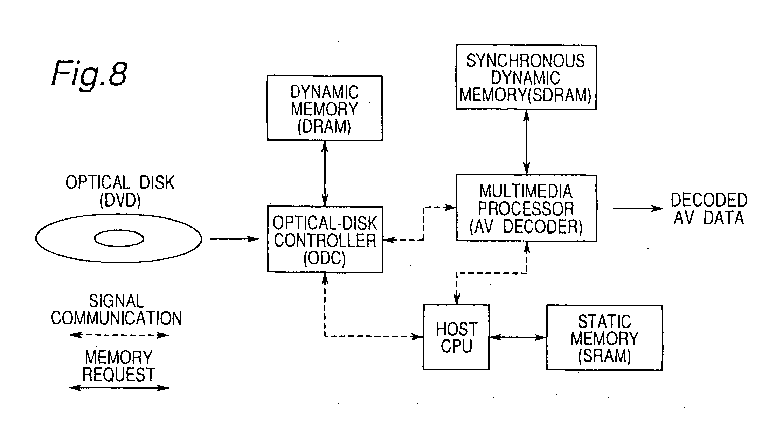

Fig. 8 shows an example of a block configuration of a conventional multimedia system. In a typical DVD (Digital Versatile Disk) player system, the main components include a laser pickup unit dedicated to an optical disk, a front-end processor that operates as an optical-disk controller (ODC) connected to an associated memory such as a DRAM, a back-end processor of a multimedia processor that operates as an A/V decoder connected to an associated memory such as an SDRAM, and a host CPU for controlling the entire multimedia system where the host CPU is connected to an associated memory such as an SRAM.

Referring to Fig 8, each processor uses its own local memory controller and a memory device for performing operation processing. These processors interactively communicate with each other and implement a decoding function for digital data stored in the disk, and output decoded audio/video (A/V) contents. It is noted here that a broken line denotes a communication line and a solid line denotes a memory request line in the drawing.

In recent years, there is a growing tendency in the industry to incorporate more features and functions into consumer products such as a DVD player. In one example, an additional digital-signal processor is added and used for post-processing of decoded audio/video data to enhance the audio/video data in quality. The addition of the new processor requires an additional memory device to be added to the DVD player system. The addition of a new memory device increases the size and cost of the overall system Moreover, the addition involves an increase in power consumption and complicates the system configuration.

In recent tendency, the cost of a synchronous dynamic memory (SDRAM) is reduced while the memory capacity is increased. Thus, demands and desires are increased for a system that can be implemented without adding a new memory device and that can instead be implemented by using only a single memory device such as a bulk SDRAM serving for the entire system. However, the conventional system is involved with several problems to be solved.

The present invention has been developed to solve these problems inherent to the conventional system, and one object of the present invention is to enable an external processor to access a memory storage device of a multimedia processor.

A (user-dedicated) consumer multimedia system usually operates at a system clock rate of a low frequency and uses lower cost memory devices, and therefore a multimedia processor of the multimedia system includes a memory function workable at its highest performance. Therefore, an object of the present invention is to implement a memory control system and memory devices that function at their highest performance through use of memory controllers.

Another object of the present invention is to enable external processors to access a bulk memory storage device of a multimedia processor and to enable one or a plurality of external processors to share a single memory device. An essential feature of the present invention is to maintain functions of the entire system and memory performance through memory-sharing.

Hence, an object of the present invention is to provide a seamless circuit arrangement for a system configuration in which individual operational functions for individual processors are unified or integrated, while achieving the minimum disruption or breakdown in functional operation for each of the processors, including the operations of the multimedia processor.

Still another object of the present invention is to reduce the cost of the whole multimedia system by using an unified common memory. For example, the object is to significantly reduce the cost of the entire system by avoiding the necessity of providing separate memories and memory controllers for individual processors associated with the multimedia system.

Still another object of the present invention is to simplify the configuration of the entire system by enabling a single shared (common) memory controller to be used for operation of discrete processors each having a different memory-accessing method.

Further another object of the present invention is to reduce the total size and weight of the overall multimedia system which is implemented with fewer components by using a unified memory controller, so that the multimedia system can be used in various portable apparatuses or a systems.

### SUMMARY OF THE INVENTION

In order to solve the conventional problems and achieve the above objects, a memory controller of the present invention is used to convert internal memory requests and one or more external requests to one or more memory access commands. There is provided a request controller which receives and selects the internal requests and produces the selected requests. The selected requests are transmitted to a formatter (format converter) which converts the format of the selected requests to a first format that is most suitable for manipulation and prioritization to be effected by a prioritizer (i.e., priority allocator).

It is noted here that, in the description given hereinbelow, the terminology "formatter" is used to refer either to a format converter for fixing an interruption as a first predetermined format (general-purpose format) or fixing an interruption as a fixed-length bit string according to a predetermined first rule.

For an external processor, a memory request is inputted as an external request to a format adapter (format converter/adapter), and is converted into an adapted request. The adapted request is converted to a request that is most suitable for manipulation and prioritization to be performed by the prioritizer. One or a plurality of adapted requests may be inputted to the prioritizer.

It is noted here that, in the description given hereinbelow, the terminology "format adapter" is used to refer either to a format converter/adapter (or, a converter) capable of converting an interruption to a second format (simplified format) or to a format converter/adapter for converting an interruption into a fixed-length bit string according to a predetermined second rule. In this case, the formatter uses a longer bit length than the format adapter.

In the prioritizer, the formatted request and the adapted request are prioritized and the prioritized requests are inputted to a request/command converter (which is also referred to as "command translator", hereinbelow). The prioritized requests are converted to appropriate memory access commands by means of the request/command converter. The memory access commands are used as actual memory control commands such as read/write commands issued for storage and retrieval based on the type of an utilizing memory.

For internal requests of the multimedia processor, the requests are continually transmitted to a memory controller to enable simple interfacing operations between various subsystems in the multimedia processor corresponding to the memory. Each internal request is fed from a request controller to the formatter (format converter) to generate a formatted request fixed to be the first format, and is then inputted to the prioritizer.

Each internal request is selected in the request controller according to a system priority, and is subjected to a segmenting process and an optimizing process in the formatter. As a result, the request fixed to be the first format enables efficient memory transfer for information for each request. This is particularly important because the multimedia processor requires a large memory bandwidth to achieve a real-time operation.

For an external request to be issued by an external processor, the request is independently processed in each format adapter and is analyzed. The analyzed request is then converted into the second format (simplified format) that is compatible with the first internal format (general-purpose format) of the multimedia processor. In this case, a control logic circuit is used to analyze the external request and to determine whether the request is valid or invalid.

At the time of inputting the resultant requests to the prioritizer, arbitration is performed between the internal request converted into the first internal format and the adapted external request according to system priority levels. Since the prioritizer performs real-time processing, the internal and external interruption requests should be transmitted within such a time that they can be accepted by the prioritizer. For example, in a DVD player system, since a DVD-dedicated LSI decodes DVD-input bitstreams at a constant rate, constant accesses to the memory is needed to be performed.

Concurrently, a host CPU, which receives user interaction, receives remote control requests such as fast playback and fast-forward search. Hence, the prioritizer should be capable of performing arbitration for both the decoding processing and user interaction to implement the real-time operation.

The prioritizer sends a prioritized request to a request/command converter (i.e., memory access converter) which performs a check and determination for the request according to a group of rules. If the prioritized request satisfies conditions of the rule check, the checked request is transferred to a memory access converter and is converted into an actual memory access command such as a read/write command that is used to access the memory device.

Concurrently, a rule checker (rule matching section) transmits an "accept" signal to a priority control section of the prioritizer, thereby indicating that the prioritized request has been received and the processing has started. On the contrary, if the prioritized request does not satisfy the conditions of the rule check, a non-acceptance signal is sent to the prioritizer.

Based on the arbitrated request and the "accept" signal received from the request/command converter, the associated "accept_int" and "accept_ext" signals are transmitted to the request controller or the format adapter, thereby indicating whether the request has been accepted.

According to a first aspect of the present invention, there is provided a multimedia processor system enabling one or more external processors to access a bulk memory device of a multimedia processor. The system includes a memory controller for accepting and arbitrating an external memory request from the external processors located outside of the multimedia processor and an internal request issued in the multimedia processor, and for performing a control process for the arbitrated requests. The system further includes a main memory shared by all processors in the multimedia processor system; a multimedia controller for accessing the main memory through the memory controller; and a system controller for accessing the main memory through said memory controller. In this arrangement, one or a plurality of external processors share one unit of the main memory.

In this arrangement, the memory controller may further include: internal-request control means for sequentially controlling in selection of the individual internal requests; formatter means for format-optimizing the selected internal request to generate an optimally-formatted request; format-adapter means for format-adapting the external request to generate an adapted request suitable to a predetermined internal format of the shared-memory controller; prioritizing means receiving the format-optimized request and the format-adapted request and performing priority arbitration for memory access requests; and request/command converting means for converting the priority-arbitrated request into a memory-access command.

According to a second aspect of the present invention, a shared-memory controller uses an external request from an external processor associated with a multimedia processor and an internal request of the multimedia processor to enable the external processor to perform memory access to a main memory. The shared-memory controller includes: internal-request control means for sequentially controlling in selection of the individual internal requests; formatter means for format-optimizing the selected internal request to generate an optimally-formatted request; and format-adapter means for format-adapting the external request to generate an adapted request suitable to a predetermined internal format of the shared-memory controller. The shared-memory controller further includes: prioritizing means receiving the format-optimized request and the format-adapted request and performing priority arbitration for memory access requests; and request/command converting means for converting the priority-arbitrated request into a memory-access command.

According to a third aspect of the present invention, there is provided a DVD player system enabling one or more external processors to access a main memory of an audio/video decoder. The system includes: a front-end processor for accessing the main memory through a memory controller included in a back-end processor; and a host CPU for accessing the main memory through the memory controller of said back-end processor The back-end processor is capable of performing acceptance and arbitration for an external memory request from the external processor and an internal request issued in the back-end processor. The main memory is a synchronous dynamic main memory shared by all processors in the DVD player system.

According to a fourth aspect of the present invention, there is provided a multimedia memory controller enabling each of external processors to perform memory access to an associated local memory by receiving memory access requests issued by the external processors and internal requests and transmitting memory access commands to the associated local memory therefrom. The multimedia memory controller includes: an internal memory-request controller for receiving the internal requests and selecting a request among from the received requests and generating a selected internal request; and a format converter for performing a format conversion for the selected request to generate a formatted request fixed to be a first predetermined format. The multimedia memory controller further includes: a format adapter for adapting a format of. each of the external memory access requests sent from the external processors to a second predetermined internal format compatible with the multimedia memory controller, thereby generating an adapted request; a priority allocator for performing prioritization and arbitration control for the memory request; and futher includes a command converter for converting the prioritized request into the memory-access command.

### BRIEF DESCRIPTION OF THE DRAWINGS

These and other objects and features of the present invention will be readily understood from the following detailed description taken in conjunction with preferred embodiments thereof with reference to the accompanying drawings, in which like parts are designated by like reference numerals and in which:
Fig. 1 is a block diagram showing a first embodiment of the present invention;
Fig. 2 is a block diagram showing a second embodiment of the present invention;
Fig. 3 is a block diagram showing a third embodiment of the present invention;
Fig. 4 is a block diagram showing a fourth embodiment of the present invention;
Fig. 5 is a block diagram showing a fifth embodiment of the present invention;
Fig. 6 is a block diagram showing a sixth embodiment of the present invention;
Fig. 7 is a block diagram showing a seventh embodiment of the present invention; and
Fig. 8 is a block diagram showing a conventional configuration of a DVD player system.

### DESCRIPTION OF THE PREFERRED EMBODIMENTS

Before the detailed description proceeds, it is noted that like parts are designated by like reference numerals throughout the accompanying drawings.

### [Embodiment 1 ]

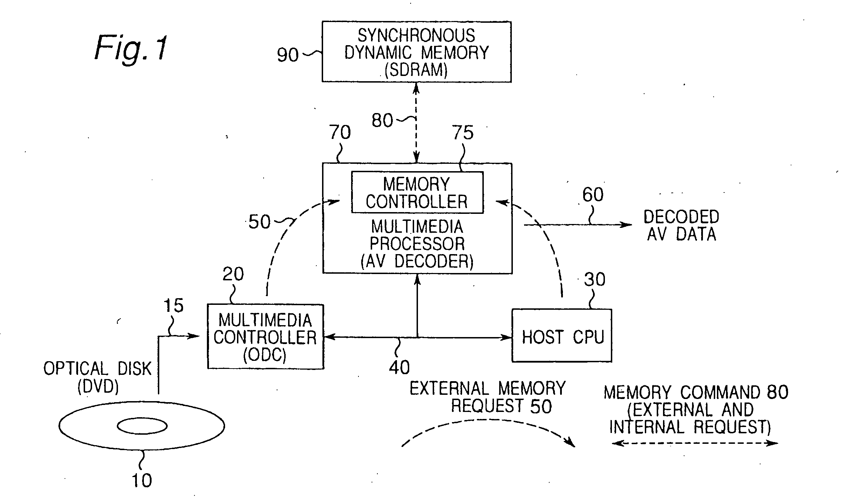

Hereinbelow, a first embodiment of the present invention will be described referring to the drawings. Fig. 1 shows a system block configuration of a DVD player system by way of an example of a multimedia processor system that uses a memory controller according to the present invention. In the configuration shown in Fig. 1, a memory controller 75 is provided in a multimedia processor 70 (which is also referred to as "back-end processor"). By using the memory controller 75, it is allowed to use all external requests sent from a multimedia controller 20 (which is also referred to as "front-end processor") and external requests sent from a host CPU 30, and it is also allowed to use all internal memory requests issued in the multimedia processor 70. In this example, the multimedia controller 20 (front-end processor) serves as an optical-disk controller (ODC) and the multimedia processor 70 (back-end processor) serves as an A/V decoder.

Referring to Fig. 1, the front-end processor (i.e., optical-disk controller "ODC") 20 extracts and reads bitstream data 15 from an optical disk (DVD) 10. The read out bitstream data 15 is transmitted to the back-end processor 70 serving as an A/V decoder which produces decoded audio/video (A/V) data 60. A DVD recorder/player system is operable under the control of the host CPU 30.

All memory accesses (external memory accesses) requests 50, which are denoted by curved broken lines in Fig. 1, issued by the front-end processor 20 and host CPU 30 are sent to the memory device through the memory controller 75 of the back-end processor (A/V decoder) 70 The communication between the processors 20, 30 and 70 is performed through a communication channel 40. Memory commands 80 including the external and/or internal requests are sent to a synchronous dynamic memory (SDRAM) 90 of a shared memory through the memory controller 75.

Hereinbelow, the operation of the DVD player system shown in Fig. 1 will be described. The front-end processor (i.e., optical-disk controller ODC) 20 controls a laser pickup unit (not shown), and reads out bitstream data 15 from the optical disk (DVD) 10.

The optical-disk controller (ODC) 20 executes all necessary processes such as data descrambling and error detection/correction. To execute these processing functions, the optical-disk controller (ODC) 20 issues an external memory request to the memory controller 75 of the A/V decoder 70, and accesses the shared memory 90 through the memory controller 75.

The bitstream data for which all the aforementioned necessary processes have been performed in the optical-disk controller (ODC) 20 is passed to the A/V decoder 70 and the bitstream is decoded therein. All the internal memory requests issued in the A/V decoder 70 is sent to the primary synchronous dynamic memory 90 of the shared memory through the memory controller 75.

Concurrently, the host CPU 30 performs the communication and control of the entire DVD player system Through the memory controller 75, the host CPU 30 accesses data preserved in the synchronous dynamic memory 90. The decoded bitstream data is outputted as decoded A/V data 60 from the A/V decoder 70.

While the multimedia controller 20 of the front-end processor is used as the optical-disk controller in the present embodiment, the present invention is not limited to this In the application field of, for example, digital TV broadcasting, the front-end processor may be a radio frequency receiver for receiving spatially transmitted bitstream data.

Moreover, the number of processors need not be limited to only three, but it may be increased or reduced when necessary. For example, a processor is preferably added to perform a post-process of the decoded A/V data. In this case, the added processor also is allowed to access the shared (common) memory 90 through the memory controller of the present invention.

Although a synchronous dynamic random access memory (SDRAM) is preferably used as the shared memory of the DVD player system, the present invention is not limited to this. The present invention may use a memory device that has an equivalent, higher, or lower performance, such as a double-data-rate random access memory (DDR SDRAM) or RAMBUS.

In the present embodiment, using the single memory controller enables all external and internal memory requests in multiprocessor systems to be serviced. The memory controller has the capability of effectively accepting and processing all the requests without influencing the performance of the entire system. This capability is particularly important in multimedia application fields. In addition, the capability enables the implementation of low costs, low power consumption, and configuration simplification of the entire system.

### [Embodiment 2]

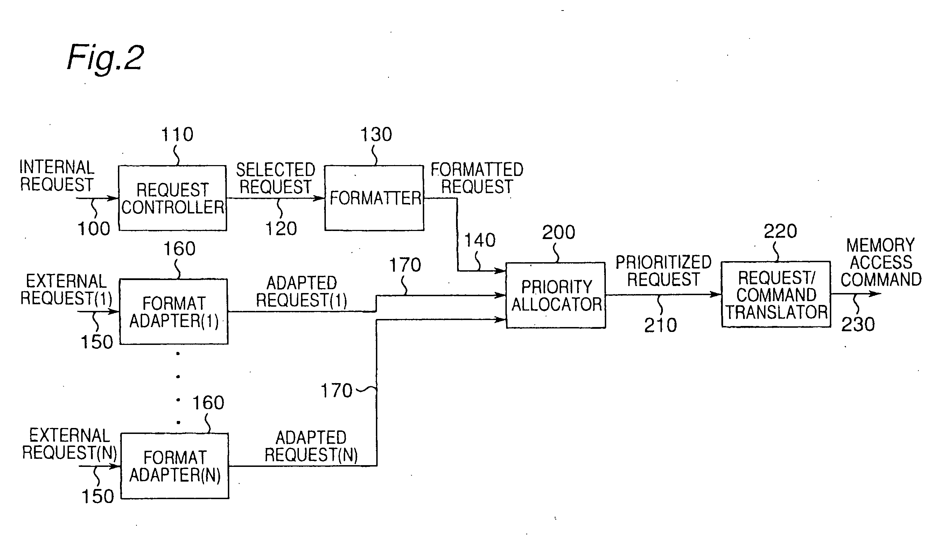

Fig. 2 shows a block configuration of a second embodiment of a memory controller according to the present invention. Referring to Fig. 2, internal requests 100 are input to a request controller 110 which outputs a selected request 120. The selected request 120 is formatted by a formatter 130 which outputs a format-optimized request 140.

In addition, one or more external requests (1 to N) 150 are each inputted to a format adapter 160 which produces adapted requests 170. Both the formatted request 140 and the adapted request 170 are inputted to a priority allocator 200 (which is also referred to as "prioritizer"). The priority allocator 200 arbitrates the priority between the formatted request 140 and the adapted request 170, and the resultant requests are outputted as prioritized requests 210. Subsequently, the prioritized requests 210 are inputted to a request/command translator 220 which converts the prioritized requests 210 to actual memory access commands 230, such as read/write commands.

Hereinbelow, the operation of the present embodiment shown in Fig. 2 will be described. The request controller 110 receives the internal requests 100, and accesses the memory such as SDRAM. The selected request 120 is obtained by the request controller 110 according to an internal selection logic circuit based on an external control signal is input to the formatter 130. The selected request 120 is subjected to necessary processes in the formatter 130, and the memory accessing request is converted into a format efficiently usable for memory transfer. The formatter 130 performs various processes and conversion, and generates the format-optimized request (referred to as "formatted request" hereinafter) 140.

Concurrently, an arbitrary number of external requests 150 are inputted to the format adapter 160 which processes each of the external requests to be adaptable to a first internal format of the multimedia processor. Each of the adapted requests 170 produced by the format adapter 160 has the same request format as that of the formatted request 140.

The priority allocator 200 accepts the formatted request 140 and the adapted request 170, performs arbitration for priorities between the both requests 140 and 170, and generates prioritized requests 210 representing the internal request and the external request. The prioritized request 210 minimizes adverse side effects for the minimum delay and other processes, and allows efficient access to the memory. The prioritized request 210 is then inputted to the request/command translator 220 which converts the request 210 into a memory access command 230 such as a read/write command, serving as actual control and data signals for accessing the memory device.

In the present embodiment, the number of the requests to be provided is arbitrary, and the numbers of the internal and external requests are also arbitrary. In addition, it is not necessary that the requests are issued in series. It is also not required for the internal and external requests to be processed concurrently, and other different processing methods may be used.

The present embodiment is advantageous in that a single request is used to implement optimally arbitrated internal and external memory-access requests, and a highly optimized commanding queue is used to achieve a high utilization of a memory resource such as bandwidth.

### [Embodiment 3]

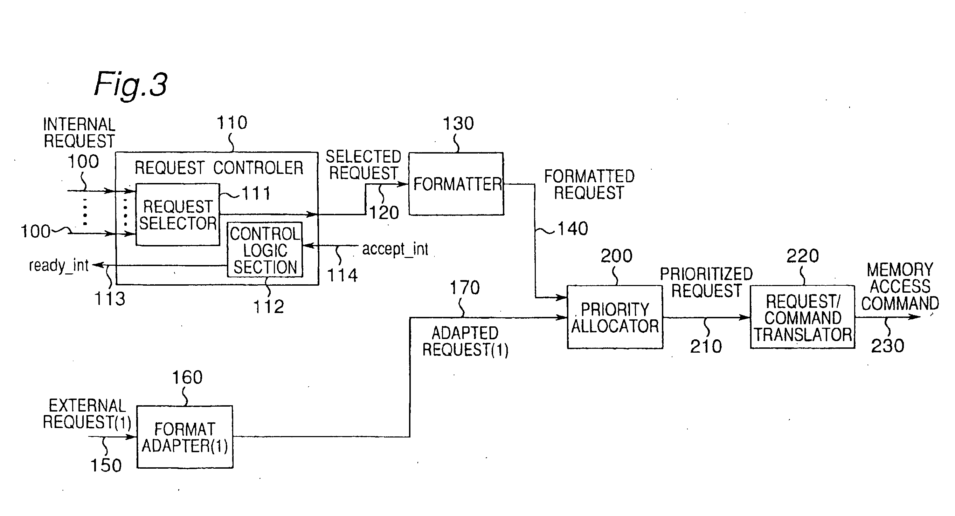

Fig. 3 shows a block configuration of another embodiment of a memory controller according to the present invention. The present embodiment 3 illustrates a more detailed configuration of the request controller 110. As the components thereof, the request controller 110 includes a request selector 111 and a control logic section 112.

Referring to Fig. 3, when an internal request 100 is input to the request controller 110, the request selector 111 is controlled in the request controller section 110, and the control logic section 112 thereby determines a selected request 120. The selected request 120 that has been output from the request controller section 110 is formatted by the formatter 130 which produces a formatted request 140.

In the meanwhile, each external request 150 is inputted to the format adapter 160 which produces an adapted request 170. The priority allocator 200 performs priority arbitration for the formatted request 140 and adapted request 170 to thereby produce the prioritized requests 210. The prioritized request 210 is inputted to the request/command translator 220 which converts the prioritized request 210 into an actual memory-access command 230. Thus, the obtained memory-access command 230 has been decoded to an extent of enabling an access control signal to be issued to the memory device.

Hereinbelow, the operation of the present embodiment shown in Fig. 3 will be described. The control logic section 112 of the request controller 110 receives an "accept_int" signal 114 indicating that a current request is in process. In a step of determining a selected request 120, when, for example, a video-decoding memory request has a priority higher than that of an audio-decoding memory request, the video-decoding memory request is first selected, and the audio-decoding memory request is then selected.

When the request controller section 110 is in a free-space state, the control logic section 112 outputs a "ready_int" signal 113 in response to an arbitrary internal request that has been enabled. In the meanwhile, the control logic section 112 controls the request selector. 111 to determine which one of the internal requests (100) should be selected as a selected request 120.

As in the operation described in Embodiment 2, the selected request 120 is subjected to necessary processes in the formatter 130, and the formatted request 140 is generated. Concurrently, an external request 150 is inputted to the format adapter 160 which processes the request 150 to be adaptable to an internal format of the multimedia processor (70).

The priority allocator 200 receives the formatted request 140 and the adapted request 170, performs arbitration of priority between the requests 140 and 170, and generates the prioritized requests 210 of the internal request and the external request. The request/command translator 220 converts the prioritized request 210 into an actual memory-access command 230 and derive the memory-access command as a practical control and data signal to enable access to the memory device.

In the present embodiment, similarly to Embodiment 2 shown in Fig. 2, the number of the requests to be provided is arbitrary. In addition, the signals for enabling the control logic section 112 to function are not limited to the "accept_int" signal 114 and the "ready_int" signal 113.

### [Embodiment 4]

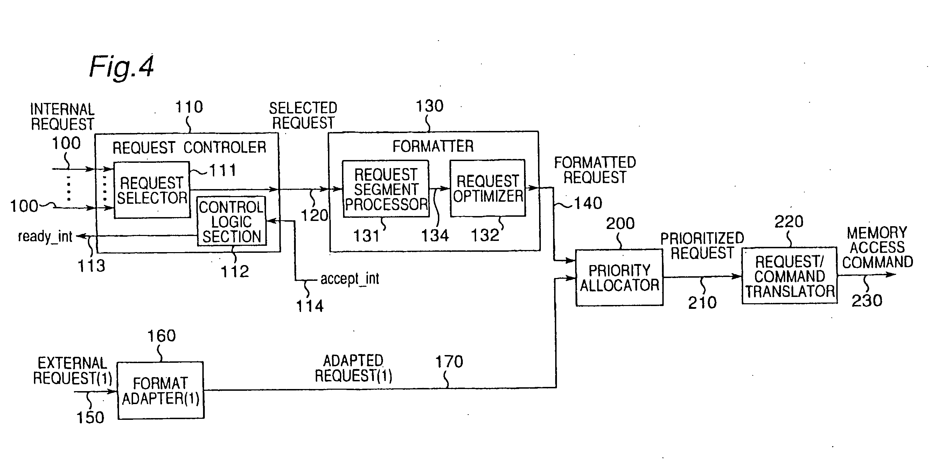

Fig. 4 shows a block configuration of a fourth embodiment of a memory controller according to the present invention. The present embodiment 4 illustrates a more detailed configuration of the formatter 130. As the components thereof, the formatter 130 includes a request segment processor 131 and a request optimizer 132.

Referring to Fig. 4, when an internal request 100 is inputted to the request controller 110, the request selector 111 is controlled in the request controller section 110, so that the control logic section 112 determines a selected request 120. The selected request 120 outputted from the request controller section 110 is inputted to the formatter 130, and is then subjected to a segmenting process in the request segment processor 131. A segmented request 134, which is a result of the segmenting process, is optimized by the request optimizer 132 which outputs a formatted request 140.

In the meanwhile, an external request 150 is processed by a format adapter 160 which generates an adapted request 170. The priority allocator 200 performs priority arbitration of the formatted request 140 and adapted request 170, and outputs the prioritized requests 210. The prioritized requests 210 is then inputted to the request/command translator 220 which converts the prioritized requests 210 into an actual memory-access command 230 that has been decoded to an extent of enabling an access control signal to be issued to the memory device.

Hereinbelow, the operation of the present embodiment shown in Fig. 4 will be described. Upon receipt of the selected request 120, the request segment processor 131 of the formatter 130 segments the selected request 120 into smaller partitions in units of a simpler basic operation according to the necessity of the selected request 120.

In the segmenting process, for example, a bulk-memory access request can be split into units of a byte or a word-data length. The segmented request 134 is further subjected to an optimization format-converting process in the request optimizer 132 which edits the segmented request to be optimized into a request format that is effective for memory access.

An example of the optimized format layout can be implemented such that a start address of memory transfer and an end address thereof are set to a page boundary portion of the SDRAM. The formatted request 140, which is a result of the optimization format-converting process, is then inputted to the priority allocator 200.

Concurrently, an arbitrary number of external requests 150 are each inputted to the format adapter 160, and are processed to be adaptable to an internal format of the multimedia processor. These adapted requests 170 have the same request format as that of the formatted request 140.

The priority allocator 200 accepts the formatted request 140 and the adapted request 170, performs arbitration of priority between the requests 140 and 170, and generates the prioritized requests 210 of the internal request and the external request. The prioritized request 210 minimizes adverse side effects for the minimum delay and other processes, and allows efficient access to the memory. The prioritized request 210 is then inputted to the request/command translator 220 which converts the prioritized request 210 into an actual memory-access command 230 such as a read/write command, serving as a practical control and data signal to enable access to the memory device.

In the present embodiment, while description has been made regarding the request segment processor 131 and the request optimizer section 132, the present invention need not be limited by the segmenting process for segmenting the request into small segments or partitions. Alternatively, the arrangement may be made such that the requests are coupled to generate a request to form a large partition with which a bulk memory can be transferred.

For the optimized format layout in the request optimizer 132, the method need not be limited to that in which the start address of memory transfer and the end address thereof are set to the page boundary portion of the SDRAM, but other processing methods improving the transfer rate may be employed.

### [Embodiment 5]

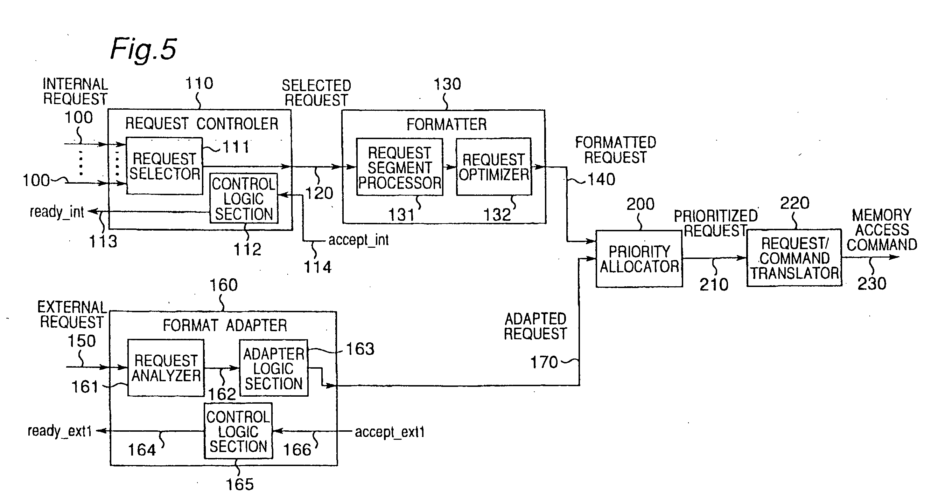

Fig. 5 shows a block configuration of still another embodiment 5 of a memory controller according to the present invention. The present embodiment illustrates a more detailed configuration of the format adapter 160. As the components thereof, the format adapter 160 includes a request analyzer 161, an adapter logic section 163, and a control logic section 165.

Referring to Fig. 5, when an internal request 100 is inputted to the request controller 110, the request selector 111 is controlled in the request controller 110, and the control logic section 112 determines a selected request 120. The selected request 120 that has been outputted from the request controller section 110 is inputted to a formatter 130. The formatter 130 has the same functions as those of the formatter 130 shown in Fig. 2. The selected request 120 is subjected to a segmenting process in the request segment processor 131, and a resultant segmented request 134 is optimized by the request optimizer 132 which produces a formatted request 140.

Concurrently, each external request 150 is analyzed by the request analyzer 161 in the format adapter 160. Specifically, according to the requirements for, for example, the size of transfer and the memory address, the inputted external request 150 is analyzed by the request analyzer 161 with use of the control logic section 165. An analyzed request 162 is inputted to the adapter logic section 163, and is converted into an adapted request 170 which is adapted so as to be shared with an internal format of the multimedia processor.

The priority allocator 200 performs priority arbitration of the formatted request 140 and adapted request 170, and then outputs prioritized requests 210. The prioritized request 210 is inputted to the request/command translator 220 which produces a practical memory-access command 230 that has been decoded to the extent of enabling an access control signal to be issued to the memory device.

Hereinbelow, a description will be made regarding the operation of the present embodiment shown in Fig. 5, focusing on the operation of the format adapter 160. The request analyzer 161 analyses the inputted external request 150 using the control logic section 165, and determines the priority of the inputted external request. Each external request 150 has a different priority, and depending on the request, for example, a byte size of data is required to be written into the memory, or a direct memory transfer (DMA) for many datawords is required.

According to the analysis results of the external requests, suitable analyzed requests 162 are inputted to the adapter logic section 163. A processing function of the adapter logic section 163 is to convert the analyzed request 162 into a format compatible with the internal memory request of the multimedia processor 70. The control logic section 165 integrates and adjusts the processing operations of the request analyzer 161 and the adapter logic section 163, and thereby outputs a desired adapted request 170. The control logic section 165 operates upon receipt of an "accept_ext" signal 166 indicating that the current adapted request 170 is in process. The control logic section 165 transmits a "ready_ext" signal 164 to an external processor when the format adapter 160 is in a free-space state.

The priority allocator 200 accepts the formatted request 140 and the adapted request 170, performs arbitration of priority between the requests 140 and 170, and generates the prioritized requests 210 of the internal request and the external request. The prioritized request 210 is inputted to the request/command translator 220 which generates a practical memory-access command 230 decoded to the extent of enabling an access control signal to be issued to the memory device.

In the present embodiment, the request analyzer 161, the adapter logic section 163, and control logic section 165 in the format adapter 160 are configured separately to each other. However, for example, the request analyzer 161 and the adapter logic section 163 may be configured to be an integrated unit to process external requests.

In addition, the configuration may be made such that the order of the processes by the request analyzer 161 and the adapter logic section 163 is changed, that is, the processing by the adapter logic section 163 for adaptation to the internal format is first performed, and subsequently, the request-analyzing process by the request analyzer 161 is performed.

### [Embodiment 6]

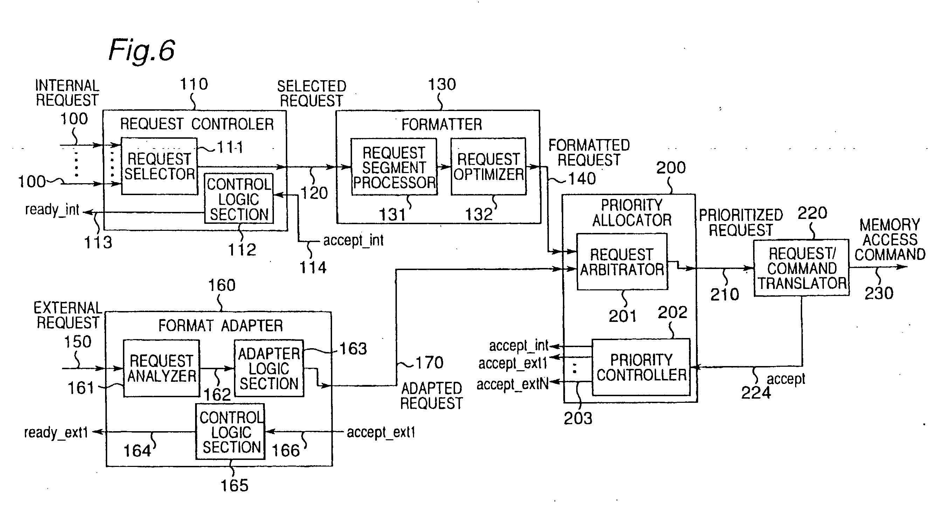

Fig. 6 shows a block configuration of still another embodiment of a memory controller according to the present invention. The present embodiment 6 illustrates a more detailed configuration of the priority allocator 200. As the components thereof, the priority allocator 200 includes a request arbitrator 201 and a priority controller 202.

Referring to Fig. 6, when an internal request 100 is inputted to the request controller 110, the request selector 111 is controlled in the request controller 110 and the control logic section 112 determines a selected request 120 to be outputted. The selected request 120 outputted from the request controller 110 is inputted to the formatter 130, and is then subjected to a segmenting process in the request segment processor 131. Thereafter, a segmented request 134 is optimized by the request optimizer 132, and is then outputted as a format-optimized (i.e., formatted) request 140.

Concurrently, in the same manner as in Embodiment 5 described above, each external request 150 is subjected to a format-adapting process in the format adapter 160, and is then outputted as an adapted request 170. The priority allocator 200 receives the adapted request 170 and the formatted request 140, and performs priority arbitration between the requests.

The request arbitrator 201 performs the arbitration according to a logic of a priority controller section 202. Specifically, the priority controller section 202 receives an "accept" signal 224 from the request/command translator 220, and in response to the signal, the priority controller section 202 outputs "accept_int" and "accept_ext" (1 ... N) signals 203, and thereby controls the request arbitration. The prioritized requests 210 of the internal and external requests are inputted to the request/command translator 220 which generates a practical memory-access command 230 that has been decoded to the extent of enabling an access control signal to be issued to the memory device.

Hereinbelow, a description will be made regarding an operation of the present embodiment shown in Fig. 6, focusing on the operation of the priority allocator 200. The priority allocator 200 accepts the formatted request 140 and the adapted request 170. According to the control performed by the priority controller 202, the request. arbitrator 201 performs arbitration for the requests based on the system-level priority of each of the requests.

An arbitration algorithm accords with a toggle/switch method between the internal request and the external request. For example, suppose there are four synchronous requests, i.e., two internal requests "internal_A" and "internal_B" and two external requests "external_C" and "external_D". In this case, the aforementioned requests are prioritized in the order of "internal_A", "external_C", "internal_B", and then "external_D". In this case, the internal requests have the higher priority than the external requests.

The arbitration logic is crucial to the performance of the entire system since it determines the service time of each request, which in turn represents a response of the system to the external or outside apparatuses. For example, in the DVD player system, the decoding logic requires frequent or constant access to be made to a frame memory during playback operation. Therefore, the external request 150 from the host CPU is required to provide a user-menu function on an on-screen display. It is therefore essential to feed the two requests so that memory-access requests are continuous in order to prevent functional breakdown and to promptly respond to a user request.

In response to each prioritized request 210 that has been inputted to the request/command translator 220, an accept signal 224 is inputted to the priority controller 202 from the request/command translator 220. Corresponding thereto, "accept_int" and "accept_ext" (1 ... N) signals 203 are outputted, and are individually transmitted to the request controller 110 and the format adapter 160, thereby indicating that the requests were received, and processing has started.

In the above embodiment, the numbers of the adapted requests 170, formatted requests 140, and prioritized requests 210 are arbitrarily. For example, the arrangement may be made such that many formatted requests 140 and the number of adapted requests 170 are larger than one prioritized request that is transmitted to many request/command translators 220.

Moreover, in the present embodiment, while the priority controller 202 receives the "accept" signal 224 as the only input control signal, an appropriate signal may be added as an input control signal to implement the same function.

In the above embodiment, although the internal requests have higher priority, the priority level allocation is not limited to such a configuration. The priority level can be statically or dynamically allocated depending on the requirement or status of the system.

### [Embodiment 7]

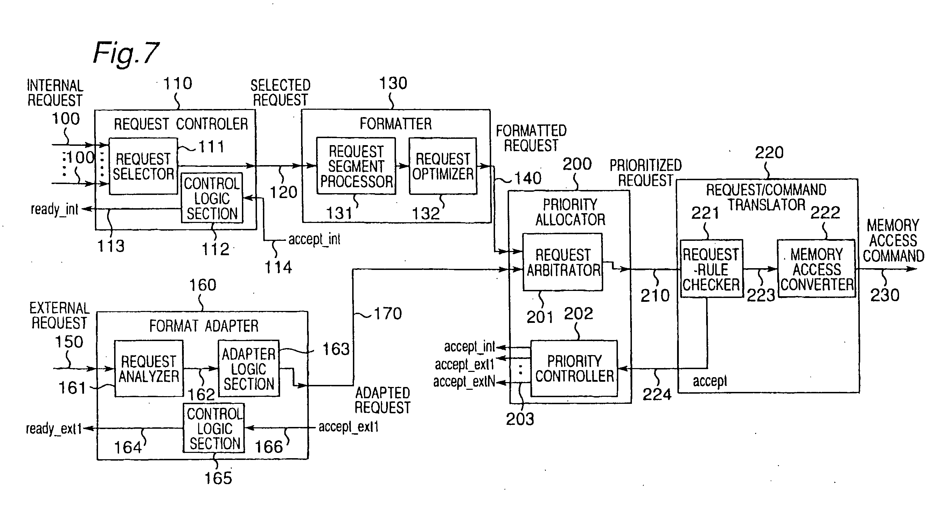

Fig. 7 shows a block configuration of still another embodiment of a memory controller according to the present invention. The present embodiment 7 illustrates a more detailed configuration of the request/command translator 220. As the components thereof, the request/command translator 220 includes a request-rule checker (rule checker) 221 and a memory access converter 222.

Referring to Fig. 7, when an internal request 100 is input to the request controller 110, the request selector 111 is controlled in the request controller 110 and the control logic section 112 determines a selected request 120 to be outputted. The selected request 120 outputted from the request controller 110 is inputted to the formatter 130, and is subjected to a segmenting process in the request segment processor 131. Thereafter, a segmented request 134 is optimized by the request optimizer 132 which produces a formatted request 140.

Concurrently, in the same manner as in the above-described embodiment 6, an external request 150 is subjected to a format-adaptation process in the format adapter 160, and is then outputted as an adapted request 170. The priority allocator 200 receives the adapted request 170 and the formatted request 140, and performs priority arbitration between the requests 140 and 170.

The request arbitrator 201 performs the arbitration according to a logic of the priority controller 202. Specifically, the priority controller 202 receives an "accept" signal 224 from the request/command translator 220, and in response to the signal 224, the priority controller 202 outputs "accept_int" and "accept_ext" (1 ... N) signals 203, and thereby controls the request arbitration.

The prioritized requests 210 of the internal and external requests are inputted to the request/command translator 220, and are subjected to a rule check in the request-rule checker (rule checker) 221. A rule-checked request 223 is inputted to the memory access converter 222 which generates a converted practical memory-access command 230 such as a read/write command.

Hereinbelow, a description will be made regarding an operation of the present embodiment shown in Fig. 7, focusing on the operation of the request/command translator 220. The request-rule checker (rule checker) 221 performs the rule check for the prioritized request 210 according to a group of rules that are determined depending on the type of a memory to be used. For example, the request-rule checker (rule checker) 221 performs a check as to whether a memory access address is valid. If the prioritized request 210 satisfies the conditions of the rule check, the checked request 223 is inputted to the memory access converter 222.

Concurrently, the request-rule checker (rule checker) 221 transmits an "accept" signal 224 to the priority controller 202 of the priority allocator 200 to thereby indicate that the result of the rule check performed for the prioritized request 210 is valid. That is, the "accept" signal 224 indicates whether the current prioritized request 210 is valid, and concurrently, whether the request 210 has been processed by the request/command translator 220. Thus, the priority controller 202 of the priority allocator 200 is enabled to control the arbitration operation.

For example, if the prioritized request 210 does not satisfy the conditions of the rule check, the priority controller 202 immediately transmits the next priority request to the request/command translator 220, thereby enabling the memory to be maximally used. Then, the checked request 223 is inputted to the memory access converter 222, and according to the type of the memory to be used, the inputted request is converted into a memory-access command 230 which has been converted to the extent of enabling an access control signal to be issued to the memory device.

As the memory-access command 230, for example, an appropriate RAS or CAS control signal for the SDRAM is outputted from the memory access converter 222.

In the present embodiment, while a memory-access conversion process step follows the rule check for the prioritized request 210, the present invention is not limited to this. For example, the rule check and the memory-access conversion process step may be executed in parallel. Alternatively, the memory-access conversion process may first be executed, and the rule check may then be executed.

As described above, according to the memory controller of the present invention, the memory control system functioning at the highest performance is implemented by using the shared-memory controller. In addition, the memory device can be shared by external processors by making the arrangement in which the external processors are enabled to access the bulk memory storage section of the multimedia processor.

With the common memory being shared, performances of the entire system and the memory are maintained, and the individual operation functions are integrated for the individual processors, and the operation function of the multimedia processor is maximized.

Moreover, with the unified memory being used, the necessity of including a memory and a memory controller into each processor is avoided, and the cost of the entire system is significantly reduced, and the configuration of the entire system is simplified.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A multimedia processor system enabling one or more external processors to access a bulk memory device of a multimedia processor, comprising:
memory controller for accepting and arbitrating an external memory request from the external processors located outside of said multimedia processor and an internal request issued in said multimedia processor, and for performing a control process for the arbitrated requests;
a main memory shared by all processors in said multimedia processor system;
multimedia controller for accessing said main memory through said memory controller; and
a system controller for accessing said main memory through said memory controller,
wherein one or a plurality of external processors share one unit of said main memory.

2. The multimedia processor system as defined in Claim 1, wherein said memory controller comprises:
internal-request control means for sequentially controlling in selection of the individual internal requests;
formatter means for format-optimizing the selected internal request to generate an optimally-formatted request;
format-adapter means for format-adapting the external request to generate an adapted request suitable to a predetermined internal format of the shared-memory controller;
prioritizing means receiving the format-optimized request and the format-adapted request and performing priority arbitration for memory access requests; and
request/command converting means for converting the priority-arbitrated request into a memory-access command.

3. The multimedia processor system as defined in Claim 1, wherein said multimedia processor is formed of an audio/video decoder, and said multimedia processor system is adapted as an optical-disk player system, and said shared main memory is formed of a synchronous dynamic memory.

4. A shared-memory controller which uses an external request from an external processor associated with a multimedia processor and an internal request of said multimedia processor to enable the external processor to perform memory access to a main memory, comprising:
internal-request control means for sequentially controlling in selection of the individual internal requests;
formatter means for format-optimizing the selected internal request to generate an optimally-formatted request;
format-adapter means for format-adapting the external request to generate an adapted request suitable to a predetermined internal format of the shared-memory controller;
prioritizing means receiving the format-optimized request and the format-adapted request and performing priority arbitration for memory access requests; and
request/command converting means for converting the priority-arbitrated request into a memory-access command.

5. The shared-memory controller as defined in Claim 4, wherein said internal-request control means comprises:
internal-request selecting means for selecting one request among the inputted internal requests; and
control logic means for determining the request to be selected according to an "accept_int" input signal and outputting "ready_int" signal when in a free-space state.

6. The shared-memory controller as defined in Claim 4, wherein said formatter means comprises:
request-segmenting means for segmenting the selected internal request into a plurality of segments to thereby generate segmented requests; and
request-optimizing means for analyzing the segmented request and converting the segmented request into a format suitable for memory transfer of said memory controller.

7. The shared-memory controller as defined in Claim 4, wherein said format-adapter means comprises:
control logic means for determining the property of the external request according to an "accept_ext" input control signal and for outputting a "ready_ext" signal when said format-adapter means is in a free-space state;
request-analyzing means for analyzing the external request under the control of said control logic means to determine validity of the external request; and
adaptation logic means for format-converting the analyzed request according to a format of said memory controller.

8. The shared-memory controller as defined in Claim 4, wherein said prioritizing means comprises:
request-arbitrating means for performing arbitration between the format-optimized request and the format-adapted request and for generating prioritized requests; and
priority control means for controlling said request-arbitrating means and outputting an "accept_int" control signal and an "accept_ext" control signal according to an "accept" signal inputted from said request/command converting means.

9. The shared-memory controller as defined in Claim 4, wherein said request/command converting means comprises:
rule determination means for checking the validity of the prioritized request based on a group of rules regarding memory access of said memory controller; and
memory-access converting means for converting the rule-checked request into a memory-access command according to a type of a required used memory.

10. A DVD player system enabling one or more external processors to access a main memory of an audio/video decoder, comprising:
a front-end processor for accessing said main memory through a memory controller included in a back-end processor;
a host CPU for accessing said main memory through said memory controller of said back-end processor;
wherein said back-end processor is capable of performing acceptance and arbitration for an external memory request from the external processor and an internal request issued in said back-end processor; and
wherein said main memory is a synchronous dynamic main memory shared by all processors in said DVD player system.

11. A multimedia memory controller enabling each of external processors to perform memory access to an associated local memory by receiving memory access requests issued by the external processors and internal requests and transmitting memory access commands to the associated local memory therefrom, comprising:
an internal memory-request controller for receiving the internal requests and selecting a request among from the received requests and generating a selected internal request;
a format converter for performing a format conversion for the selected request to generate a formatted request fixed to be a first predetermined format;
a format adapter for adapting a format of each of the external memory access requests sent from the external processors to a second predetermined internal format compatible with said multimedia memory controller, thereby generating an adapted request;
a priority allocator for performing prioritization and arbitration control for the memory request; and
a command converter for converting the prioritized request into the memory-access command.

12. The multimedia memory controller as defined in Claim 11, wherein said internal memory-request controller comprises:
internal-request selector for selecting one request among the inputted internal requests; and
control logic section for determining the request to be selected according to an "accept_int" input signal and outputting "ready_int" signal when in a free-space state.

13. The multimedia memory controller as defined in Claim 11, wherein said format converter comprises:
request-segmenting section for segmenting the selected internal request into a plurality of segments to thereby generate segmented requests; and
request-optimizer for analyzing the segmented request and converting the segmented request into a format suitable for memory transfer of said memory controller.

14. The multimedia memory controller as defined in Claim 11, wherein said format adapter comprises:
control logic section for determining the property of the external request according to an "accept_ext" input control signal and for outputting a "ready_ext" signal when said format-adapter is in a free-space state;
request-analyzer for analyzing the external request under the control of said control logic section to determine validity of the external request; and
adaptation logic section for format-converting the analyzed request according to a format of said memory controller.

15. The multimedia memory controller as defined in Claim 11, wherein said priority allocator comprises:
request-arbitrator for performing arbitration between the format-optimized request and the format-adapted request and generating prioritized requests; and
priority control section for controlling said request-arbitrator and outputting an "accept_int" control signal and an "accept_ext" control signal according to an "accept" signal inputted from said request/command converter.

16. The multimedia memory controller as defined in Claim 11, wherein said request/command converter comprises:
rule checker for checking the validity of the prioritized request based on a group of rules regarding memory access of said memory controller; and
memory-access converter for converting the rule-checked request into a memory-access command according to a type of a required used memory.
